# EUROPÄISCHE PATENTSCHRIFT

(11) **EP 1 197 417 B1**
(45) Veröffentlichungstag und Bekanntmachung des Hinweises auf die Patenterteilung: **21.12.2005**
(21) Anmeldenummer: 01890293.2
(22) Anmeldetag: 11.10.2001
(51) Int. Cl.: B61K 9/12, G01M 17/10

(54) **Verfahren und Vorrichtung zur Schadenserkennung an Rädern eines Schienenfahrzeuges**
Method and apparatus for detecting defects on the wheels of a railway vehicle
Méthode et appareil pour détecter des défauts sur les roues d' un véhicule ferroviaire

(30) Priorität: 12.10.2000 AT 17492000
(43) Veröffentlichungstag der Anmeldung: 17.04.2002
(73) Patentinhaber: Siemens SGP Verkehrstechnik GmbH, 1110 Wien (AT)
(72) Erfinder: Alexandru, Theodor, Dipl.Ing., 8020 Graz (AT); Kitzmüller, Christian, 8010 Graz (AT); Wiemerslage, Dieter, 91093 Untermembach (DE); Einzmann, Klaus, Dipl.Ing., 91350 Gremsdorf-Buch (DE)
(74) Vertreter: Matschnig, Franz

(56) Entgegenhaltungen:
- WO-A-00/60322
- WO-A-00/76828
- WO-A-82/00805
- US-A- 5 433 111

## Beschreibung

Die Erfindung betrifft ein Verfahren zur Schadenserkennung an in Achslagerungen gelagerten Rädern eines Schienenfahrzeuges, wobei im Bereich zumindest einer Achslagerung zumindest ein Beschleunigungssignal erzeugt wird, aus welchem Radunrundheitsharmonische ermittelt werden, wobei aus einer vorgebbaren Anzahl von Radunrundheitsharmonischen zumindest ein Kennwert, der ein Maß für den Zustand des betrachteten Rades darstellt, gebildet wird.

Weiters betrifft die Erfindung eine Vorrichtung zur Schadenserkennung an in Achslagern gelagerten Rädern eines Schienenfahrzeuges, wobei im Bereich zumindest einer Achslagerung zumindest ein Beschleunigungssensor vorgesehen ist, der mit einer Auswerteeinheit in Verbindung steht, die dazu eingerichtet ist, zumindest ein Beschleunigungssignal von dem Beschleunigungssensor zu empfangen, und daraus Radunrundheitsharmonische zu ermitteln, wobei die Auswerteeinheit weiters dazu eingerichtet ist, aus einer vorgebbaren Anzahl von Radunrundheitsharmonischen zumindest einen Kennwert zu bilden, der ein Maß für den Zustand des betrachteten Rades darstellt.

Der Kenntnis des Zustandes der Räder kommt bei dem praktischen Einsatz eines Schienenfahrzeuges vor allem hinsichtlich der Betriebssicherheit eine große Bedeutung zu.

Eine häufig angewendete Methode zur Erkennung von Radschäden besteht darin, die Räder eines Schienenfahrzeuges einer Sichtkontrolle zu unterwerfen und gegebenenfalls zu einer weiteren Untersuchung auszubauen.

Es sind auch Vorrichtungen bekannt, die auf der Erzeugung von elektronischen Signalen, beispielsweise von Beschleunigungssignalen, an vorgebbaren Bauteilen basieren, wobei aus dem gewonnenen Signalen auf den Zustand des betrachteten Bauteils, beispielsweise eines Rades, zurückgeschlossen werden soll.

Eine derartige Vorrichtung wird in der EP 0 058 705 beschrieben. Die dort offenbarte Vorrichtung weist im Bereich jeder Achslagerung der Räder einen Sensor auf, beispielsweise einen Beschleunigungssensor, der Achslagerschwingungen aufnimmt und als Signale an eine Auswerteeinheit weiterleitet. Aus diesen Signalen kann in der Auswerteeinheit auf den Zustand des betrachteten Rades zurückgeschlossen werden.

Die WO 82/00805 A1 offenbart ebenfalls ein elektronisches Überwachungssystem für Radachsen eines Schienenfahrzeuges. Die bekannte Vorrichtung weist im Bereich jeder Achslagerung von Rädern eines Schienenfahrzeuges einen Sensor, beispielsweise einen Beschleunigungssensor, auf, der Achslagerschwingungen aufnimmt und als Signale an eine Auswerteeinheit weiterleitet. Aus diesen Signalen kann auf den Zustand eines betrachteten Bauteils, beispielsweise eines Rades, zurückgeschlossen werden. Dabei wird das Auftreten unterschiedlicher, d. h. normalerweise nicht vorhandener, Radschäden entsprechender Frequenzen beobachtet.

Die DE 2 105 869 A1 offenbart ein Verfahren zur Erkennung von Laufflächenschäden an Eisenbahnrädern, wobei an den Achslagern Messfühler angeordnet sind, welche die Beschleunigungen, die beim Abrollen eines Rades mit schadhafter Lauffläche auftreten, messen. Die einer schadhaften Lauffläche zugeordneten Beschleunigungen werden in elektrische Signale umgewandelt und auf einer Anzeigeeinrichtung dargestellt.

Die nach veröffentlichte WO 00/60322 A zeigt ein Verfahren und eine Vorrichtung zur Überwachung eines Fahrgestells eines Schienenfahrzeuges. Bei dem bekannten Verfahren werden die Beschleunigungen an zumindest zwei Achsen des Fahrgestells mittels Beschleunigungssensoren erfasst. Die von dem Beschleunigungssensoren abgegebenen Signale werden einer Fouriertransformation unterworfen, wobei die daraus resultierenden Spektren gespeicherten Spektren gegenübergestellt werden. Auftretende Abweichungen werden mit Schwellwerten verglichen und einem System zur Steuerung des Fahrzeugs weitergegeben.

Die nach veröffentlichte WO 00/76828 A betrifft ein Verfahren zum Überwachen des Fahrverhaltens eines Schienenfahrzeuges, wobei an einem Fahrwerk des Schienenfahrzeuges ein Beschleunigungssensor und ein weiterer Sensor angeordnet ist. Die Sensoren sind mit einer Auswerteeinheit verbunden, in welcher von den beiden Sensoren erzeugte Signale miteinander verknüpf werden. Aus dem verknüpften Signal wird ein Kennwert gebildet, der mit einem Referenzwert verglichen wird.

Die US 5 433 111 A beschreibt eine Vorrichtung und ein Verfahren zur Erkennung von Radschäden eines Schienenfahrzeuges. Die bekannte Vorrichtung weist eine Messeinheit zur Ermittlung der Achsrotation eines Radsatzes und einen Bewegungssensor, beispielsweise einen Beschleunigungssensor, zur Erfassung von Bewegungen vertikal zur Schienenebene. Tritt ein Radschaden auf, so wird mit der Periode der Achsrotation ein Beschleunigungssignal in vertikaler Richtung erzeugt, welches einen Rückschluss darauf zulässt, ob ein Radschaden vorliegt, wobei das Auftreten von Radunrundheitsharmonischen mit einem Radschaden gleichgesetzt wird.

Nachteilig an dem bekannten Verfahren ist, dass es für eine praktische Lösung des Problems, einen Radschaden bei einem Schienenfahrzeug zu erkennen, nicht besonders gut geeignet ist, da in der Praxis bei allen rollenden mechanischen Systemen, wie beispielsweise Rädern eines Schienenfahrzeuges, immer Unrundheitsharmonische auftreten - selbst bei neuen, unbeschädigten Rädern treten infolge der bei der Herstellung zwangsweise vorhandenen Unregelmäßigkeiten der Lauffläche Radunrundheitsharmonische auf.

Die US 5 924 654 offenbart eine Vorrichtung zur Erfassung der Bewegungen eines Schienenfahrzeuges, wobei auf der Innenseite eines Schienenfahrzeugsrahmens ein Sensor angeordnet ist, der zur Erfassung der Bewegungen des Schienenfahrzeuges eingerichtet ist. In einer mit dem Sensor verbundenen Auswerteeinheit können anhand von dem Sensor übermittelten Signalen Schäden an dem Schienenfahrzeug erkannt werden.

Nachteilig an den bekannten Methoden und Vorrichtungen ist, dass sie im Fall der Sichtkontrolle mit einem sehr hohen Zeit- bzw. Kostenaufwand verbunden sind, und im Fall der bekannten elektronischen Überwachung keine befriedigenden Ergebnisse hinsichtlich der Genauigkeit bei der Schadenserkennung bzw. Beurteilung liefern.

Es ist daher eine Aufgabe der Erfindung, einen Weg zu schaffen, mit dem es möglich ist einen Radschaden möglichst genau und mit großer Sicherheit kostengünstig festzustellen.

Diese Aufgabe wird mit einem Verfahren der eingangs genannten Art dadurch gelöst, dass zur Berechnung des Kennwertes Amplituden einer vorgebbaren Anzahl von Radunrundheitsharmonischen durch das Quadrat einer jeweils der betreffenden Radunrundheitsharmonischen zugehörigen Kreisfrequenz dividiert und die daraus resultierenden, räumlichen Radunrundheitsharmonischen hierauf unter Berücksichtigung ihrer Phasenlage einer inversen Fouriertransformation unterworfen werden.

Diese Lösung erlaubt eine sehr genaue Quantifizierung eines Radschadens, da die Radunrundheitsharmonischen ein wesentliches Merkmal für den Radzustand darstellen und eine Merkmalsextraktion in Form eines Kennwertes eine sehr genaue Aussage über den Radzustand in qualitativer und quantitativer Hinsicht ermöglichen.

Eine vorteilhafte Ausführungsform, um die Radunrundheitsharmonischen exakt zu bestimmen besteht darin, dass Signalwerte des zumindest einen Beschleunigungssignals, die innerhalb eines vorgebbaren Zeitfensters liegen, einer Fouriertransformation oder einer ähnlichen Transformation unterworfen werden, und aus jeder Transformierten der Signalwerte des Beschleunigungssignals die Radunrundheitsharmonischen ermittelt werden.

Weiters kann zur Ermittlung der Radunrundheitsharmonischen die Drehfrequenz einer Radachse zumindest eines betrachteten Rades ermittelt werd.

Um eine Analyse des Radzustandes in Abhängigkeit von der Betriebsdauer des Rades zu ermöglichen, wird der zumindest eine Kennwert in einer Kennwertdatenbank abgelegt.

Zur Realisierung des erfindungsgemäßen Verfahrens eignet sich im besonderen eine Vorrichtung der eingangs genannten Art, bei welcher die Auswerteeinheit zur Bestimmung des Kennwertes dazu eingerichtet ist, Amplituden einer vorgebbaren Anzahl von Radunrundheitsharmonischen durch das Quadrat der jeweils der betreffenden Radunrundheitsharmonischen zugehörigen Kreisfrequenz zu dividieren und die daraus resultierenden, räumlichen Radunrundheitsharmonischen hierauf unter Berücksichtigung ihrer Phasenlage einer inversen Fouriertransformation zu unterwerfen.

Vorteilhafterweise ist die Auswerteeinheit dazu eingerichtet, Signalwerte des zumindest einen Beschleunigungssignals, die innerhalb eines vorgebbaren Zeitfensters liegen, einer Fouriertransformation oder einer anderen unitären Transformation zu unterwerfen, die den Zeitbereich eines Signals auf den Frequenzbereich abbildet.

Weiters kann die Auswerteeinheit dazu eingerichtet sein, zur Ermittlung der Radunrundheitsharmonischen die Drehfrequenz einer Radachse zumindest eines betrachteten Rades zu ermitteln.

In einer günstigen Ausführungsform der Erfindung ist eine Kennwertdatenbank zur laufenden Speicherung der Kennwerte vorgesehen.

Die Erfindung samt weiteren Vorteilen wird im folgenden anhand einiger nicht einschränkender Ausführungsbeispiele näher erläutert, die in der Zeichnung dargestellt sind, in dieser zeigen:
Fig. 1 in einer Draufsicht auf ein Drehgestell die Anordnung von Beschleunigungssensoren gemäß der Erfindung zur Ermittlung von Radschäden,
Fig. 2 eine erfindungsgemäße Vorrichtung in einem vereinfachten Blockschaltbild,
Fig. 3 einen Ausschnitt aus einem Amplitudenspektrum eines Beschleunigungssignals, bei welchem auf der y-Achse die Beschleunigung und auf der x-Achse die Frequenzen aufgetragen sind,
Fig. 4. eine Phasendifferenzverteilung zweier Radunrundheitsharmonischer, in einem Zeigerdiagramm
Fig. 5 einen weiteren Ausschnitt aus einem Amplitudenspektrum eines Beschleunigungssignals;
Fig. 6 ein Kepstrum des Amplitudenspektrums aus Fig. 5;
Fig. 7 einen weiteren Ausschnitt aus einem Amplitudenspektrums eines Beschleunigungssignals mit Phaseninformation, wobei auf der y-Achse die Beschleunigungen und auf der x-Achse die Frequenzen aufgetragen sind,
Fig. 8 das Amplitudenspektrum aus Fig. 7 mit Phaseninformation in einer vereinfachten Darstellung;
Fig. 9 ein Spektrum räumlicher Amplituden mit Phaseninformation und
Fig. 10 einen Unrundheitsverlauf, wobei auf der y-Achse die Abweichung von der Kreisform eines betrachteten Rades und auf der x-Achse der polare Verlauf in Grad.

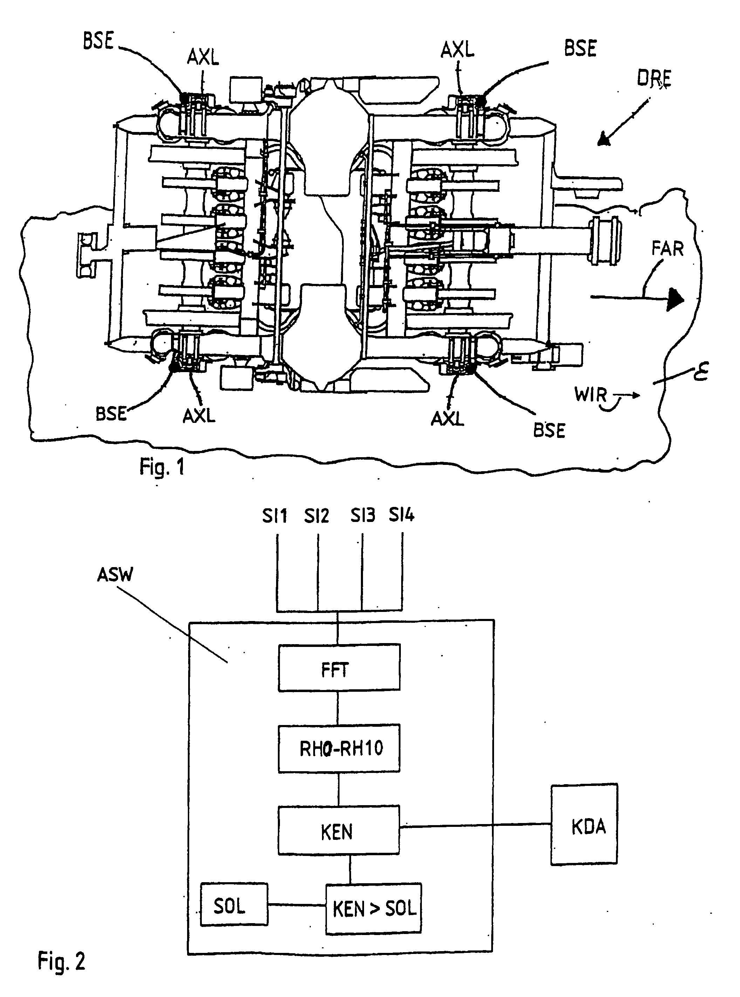

Gemäß Fig. 1 weist eine erfindungsgemäße Vorrichtung zur Schadenserkennung an einem Rad eines Schienenfahrzeuges an jeder Achslagerung AXL eines Rades eines Drehgestells DRE des Schienenfahrzeuges einen Beschleunigungssensor BSE auf.

Durch die Drehbewegung einer starr mit einem Innenring eines Wälzlagers verbundenen Radachse werden aufgrund von Unebenheiten an der Lauffläche eines abrollenden Rades während einer Fahrt des Schienenfahrzeuges Schwingungen in dem Drehgestell induziert. Diese Schwingungen sind in Form lokaler Beschleunigungsschwankungen an der Achslagerung AXL der Radachse messbar, wobei ausgewählte Schwingungsanteile, die sogenannten Radunrundheitsharmonischen, Rückschlüsse auf den Radzustand zulassen.

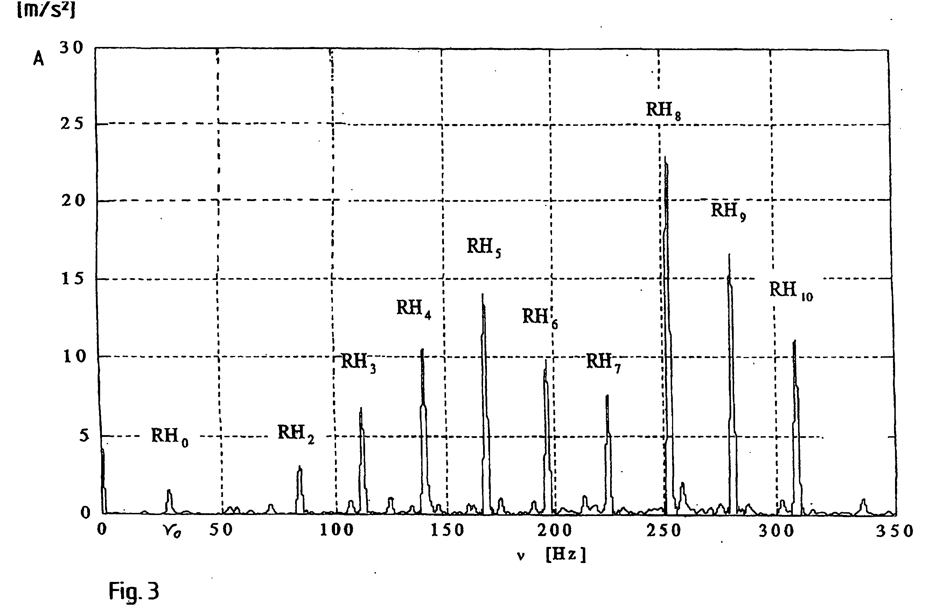

Bei den Radunrundheitsharmonischen handelt es sich um erzwungene periodische Schwingungen, die durch Abweichungen des Radquerschnittes von der Kreisform hervorgerufen werden. Der dem Entstehen von Radunrundheitsharmonischen zugrundeliegende Mechanismus kann wie folgt verstanden werden: Das Abrollen der nicht runden Räder verursacht Erschütterungen des Drehgestells. Eine Stelle an dem Radkranz des Rades wird dabei in einem zeitlichen Abstand überrollt, der dem Kehrwert der Drehfrequenz der Radachse entspricht. Eine Beschädigung/Abflachung des Radkranzes führt daher zu einer Stoßfolge mit der Drehfrequenz der Radachse und induziert eine Radunrundheitsschwingung in der Achslagerung des betreffenden Rades deren Grundfrequenz exakt mit der Drehfrequenz v₀ der Radachse übereinstimmt (Fig. 3).

Unter dem Begriff Harmonische werden in diesem Dokument Spektrallinien verstanden, deren Frequenzen ein ganzzahliges Verhältnis zu einer gemeinsamen Grundfrequenz v₀ aufweisen. Dies tritt insbesondere bei der Fouriertransformation von periodischen, nicht sinusförmigen Signalen auf. Einer Harmonischen entsprechen eine Frequenz, eine Amplitude und eine Phasenlage. Die Grundschwingung entspricht dabei der niedrigsten Frequenz der harmonischen Reihe, welche dem Kehrwert der Periodendauer eines solchen Signals entspricht. Bei ihr beginnt die Nummerierung mit 0. Alle höheren Frequenzen (Harmonische bzw. "Oberschwingungen") werden in diesem Dokument aufsteigend ausgehend von der Grundschwingung nummeriert, d. h. die erste Oberschwingung ist die erste Harmonische.

Die oben erwähnte Achslagerung AXL besteht üblicherweise aus dem Wälzlager, Gehäuseteilen und einem Deckel. Die Beschleunigungssensoren BSE können beispielsweise an dem Deckel bzw. an dem Gehäuse der Achslagerung AXL angeordnet sein.

Ein wesentliches Element der vorliegenden Erfindung ist die Erkenntnis, dass besonders repräsentative Messergebnisse erzielt werden können, wenn die Wirkungsrichtung der Beschleunigungssensoren BSE im wesentlichen normal zur Schienenebene ε oder parallel zur Fahrtrichtung des Schienenfahrzeuges verläuft. In der Zeichnung ist die Fahrtrichtung FAR bzw. die Wirkungsrichtung der Beschleunigungssensoren BSE mit einem Pfeil dargestellt.

Unter Wirkungsrichtung eines Beschleunigungssensors BSE wird in diesem Dokument die Richtung verstanden, in welcher der Sensor Beschleunigungskräfte aufnehmen und Signale liefern kann.

Die Beschleunigungssensoren BSE können beispielsweise als piezoelektrische Sensoren ausgebildet sein, bei welchen in bekannter Weise ein piezoelektrischer Kristall zwischen zwei parallel zueinander verlaufenden Kondensatorplatten angeordnet ist. Findet diese Art von Sensoren Verwendung so kann man dadurch, dass die beiden Kondensatorplatten im wesentlichen normal zur Fahrtrichtung des Schienenfahrzeuges oder parallel zur Schienenebene ε verlaufen, die Wirkrichtung der Beschleunigungssensoren BSE mit der Fahrtrichtung bzw. mit einer Richtung normal zu dieser zur Übereinstimmung bringen. Selbstverständlich können auch andere bekannte Beschleunigungssensoren, die auf anderen Mechanismen beruhen, verwendet werden.

In der weiteren Betrachtung in diesem Dokument wird auf eine Anordnung der Beschleunigungssensoren Bezug genommen, bei welcher die Wirkrichtung der Sensoren normal zur Schienenebene ε verläuft, wobei diese Wirkungsrichtung WIR aus darstellerischen Gründen hier nicht gezeigt ist.

Gemäß Fig. 2 werden die von den Beschleunigungssensoren BSE aufgenommenen Beschleunigungssignale SI1, SI2, SI3, SI4 an eine Auswerteeinheit ASW übermittelt. Die Übertragung der Beschleunigungssignale SI1, SI2, SI3, SI4 von den Beschleunigungssensoren BSE zu der Auswerteeinheit ASW kann über elektrische Leiter, Glasfaserkabel oder drahtlos erfolgen. Dadurch, dass jedem Rad zumindest ein Beschleunigungssignal SI1, SI2, SI3, SI4 zugeordnet ist, kann ein Radschaden sofort lokalisiert werden.

In der Auswerteeinheit ASW werden Signalwerte der Beschleunigungssignale SI1, SI2, SI3, SI4, die in einem vorgebbaren Zeitintervall liegen, einer Fouriertransformation FFT bzw. einer anderen unitären Transformation unterworfen werden, die den Zeitbereich eines Signals auf den Frequenzbereich abbildet, unterworfen.

Schaltungen und Verfahren zur Durchführung einer Fouriertransformation, insbesondere einer Fast Fouriertransformation sind bekannt und beispielsweise in der EP 402 145 und in "Sprachverarbeitung" von B. Eppinger und E. Herter; Hanser Verlag München Wien 1993 S. 68-71 beschrieben.

In den erhaltenen Spektren werden gewisse Spektralanteile, die sogenannten Radunrundheitsharmonischen RH0 - RH10, auf die weiter unten erläuterte Weise ermittelt.

Die Grundschwingung bzw. Grundharmonische der Radunrundheitsharmonischen RH0 - RH10 liegt in einer Spektraldarstellung der Beschleunigungssignale SI1, SI2, SI3, SI4, wie bereits oben erwähnt, exakt bei der Drehfrequenz vo der Radachse. Zur genauen Ermittlung dieser Drehfrequenz kann an der Radachse ein Drehfrequenzsensor angeordnet sein.

Zur quantitativen Analyse eines Radschadens wird als Kennwert KEN beispielsweise der Mittelwert der Amplituden einer vorgebbaren Anzahl von Radunrundheitsharmonischen RH0 - RH10 gebildet und mit einem vorgebbaren Sollwert SOL verglichen. Je nach Betrag der Abweichung des Kennwertes KEN von dem Sollwert SOL kann eine Quantifizierung des Schadensausmaßes erfolgen.

Eine andere Möglichkeit besteht darin, dass Wertebereichen bzw. Werten des soeben erwähnten Kennwertes ein bestimmter quantitativer Schadenszustand des Rades entspricht. Ein bestimmter Wert/Wertebereich des Kennwertes KEN entspricht beispielsweise einem geringen Schaden, ein anderer Wert/Wertebereich einem stärker beschädigten Rad und wieder ein anderer Wert/Wertebereich einem schwer beschädigten Rad. Ein direkter Vergleich mit einem Sollwert SOL ist in diesem Fall nicht notwendig.

Nach Fig. 3 weisen die Amplituden A der Radunrundheitsharmonischen RH0, RH1, RH2, RH3, RH4, RH5, RH6, RH7, RH8, RH9, RH10 unterschiedliche Höhen auf. Bei Unrundheiten und Flachstellen der Räder weisen die dazugehörigen Radunrundheitsharmonischen RH0-RH10 stark erhöhte Amplituden A auf, weshalb der oben beschriebene Kennwert zur quantitativen Analyse mit zunehmender Unrundheit bzw. Abflachung zunimmt.

Eine qualitative Bestimmung eines Radschadens lässt sich besonders einfach für die Räder eines Radsatzes realisieren. Durch die starre Verbindung der beiden Räder mittels einer Achse, weisen die beiden Räder unabhängig von ihrem Bewegungszustand immer die selbe Relativlage zueinander auf. Dies ist auch der Grund, warum aus einer Analyse der Phasenlagen der den beiden Rädern zugeordneten Radunrundheitsharmonischen RH0-RH10 auf die Art des Radschadens geschlossen werden kann.

Nach Ermittlung der jeweiligen Radunrundheitsharmonischen werden deren Phasenlagen bestimmt, wobei die Phasenlagen aus den Fouriertransformierten der Beschleunigungssignale entnommen werden und anschließend werden die Differenzen der Phasenlagen ausgewählter Radunrundheitsharmonischer gebildet.

Die Phasendifferenzen werden jeweils für die oben erwähnten Zeitintervalle errechnet, für welche die Fouriertransformation der Beschleunigungssignale gebildet wird.

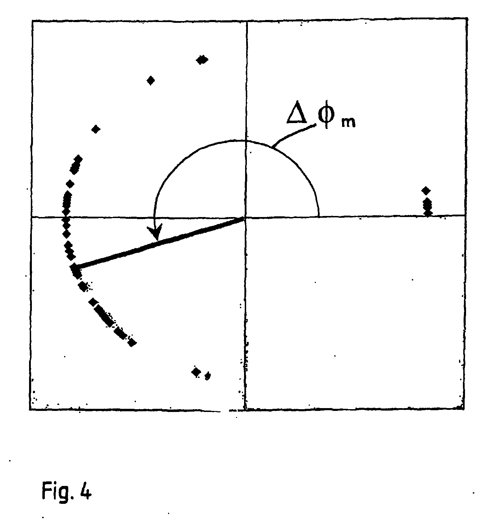

Gemäß Fig. 4 kann das vermehrte Auftreten bestimmter Werte der betrachteten Phasendifferenzen Δϕm, die hier anschaulichkeitshalber in einem Einheitskreis aufgetragen sind, verschiedenen Schadensfällen zugeordnet werden. Der Index m dient zur fortlaufenden Nummerierung der Phasendifferenzen. Treten beispielsweise Phasendifferenzen von ungefähr 0 Grad mit erhöhter Häufigkeit auf, so kann daraus auf Flachstellen an beiden Rädern eines Radsatzes geschlossen werden, während ein gehäuftes Auftreten von Phasendifferenzen um 180 Grad zwei polygonalverformten Rädern entspricht.

Tritt keine Phasendifferenz mit erhöhter Häufigkeit auf, so kann daraus geschlossen werden, dass noch keine ausgeprägte Verformung der Räder vorliegt.

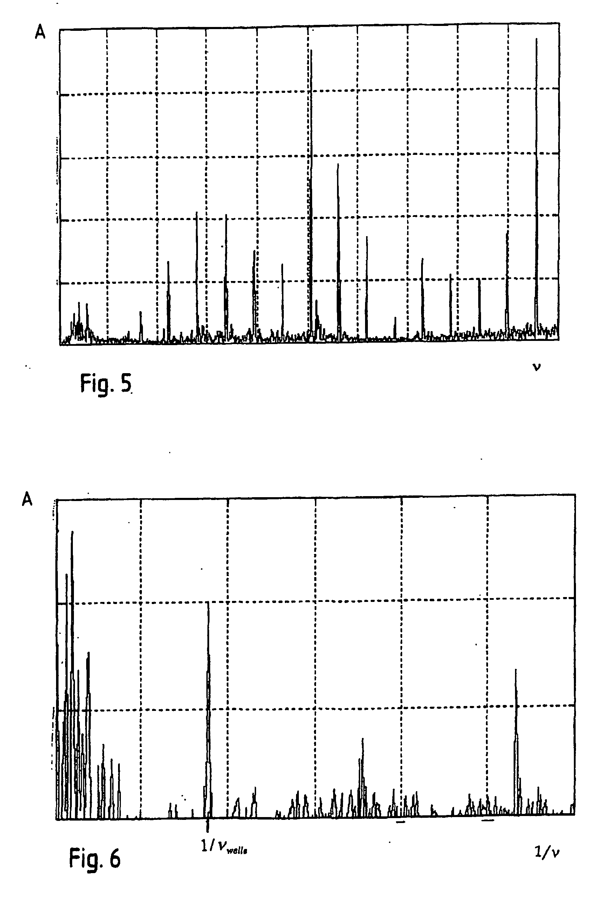

Eine weitere Methode zur quantitativen Radunrundheitsdiagnose besteht darin, die Fourietransformierte der Beschleunigungssignale, wie sie in Fig. 5 dargestellt ist, einer Kepstrumtransformation zu unterwerfen, wobei sich das Kepstrum nach folgender Formel errechnet KEP = iFFT (In (FFT)), in der KEP das Kepstrum iFFT die inverse Fouriertransformation, FFT die schnelle Fouriertransformation des Beschleunigungssignals und In den natürlichen Logarithmus bedeuten - siehe dazu "Digitale Sprachverarbeitung" von Peter Vary et. al. Teubner-Verlag Stuttgart, 1998, S 68 - 69.

Das Spektrum nach Fig. 5 entspricht im wesentlichen dem Spektrum nach Fig. 3, die dargestellten Spektrallinien entsprechen auch hier einer vorgebbaren Anzahl von Radunrundheitsharmonischen. Aus darstellerischen Gründen wurde jedoch auf eine Nummerierung der Radunrundheitsharmonischen in Fig. 5 verzichtet.

Die Kepstrum-Darstellung nach Fig. 6 enthält im Fall eines unrunden Rades beim Kehrwert der Wellenfrequenz *v*_{*welle*} des Rades eine Spitze, welche der mittleren Höhe aller Radunrundheitsharmonischen aus dem betrachteten Frequenzintervall entspricht und somit einen Rückschluss auf die Existenz einer Unrundheit sowie auf die Art der Verformung zulässt.

Eine weitere Möglichkeit, aus den Radunrundheitsharmonischen RH0-RH10 einen für den Radzustand charakteristischen Kennwert KEN zu berechnen, besteht darin, die maximale Abweichung der Lauffläche überwachter Räder von der idealen Kreisform zu bestimmen. Der Einfluss des Oberbaus - durch Anregung von Radharmonischen, die im Resonanzbereich der Eigenschwingungen des Oberbaus liegen, kann es zu ungewollten Verstärkungen einzelner Amplituden kommen - auf die Amplituden der Radunrundheitsharmonischen kann in einer einfachen Ausführungsform dadurch verringert werden, dass über längere Zeitabschnitte Amplitudenwerte a der Radunrundheitsharmonischen RH0- RH10 gemittelt werden. Die gemittelten Radunrundheitsharmonischen RH0- RH10 können in weiterer Folge zur Kennwertbildung unter Berücksichtigung ihrer Phasenlagen ϕ, wie weiter unten beschrieben, einer inversen Fouriertransformation iFFT unterzogen werden.

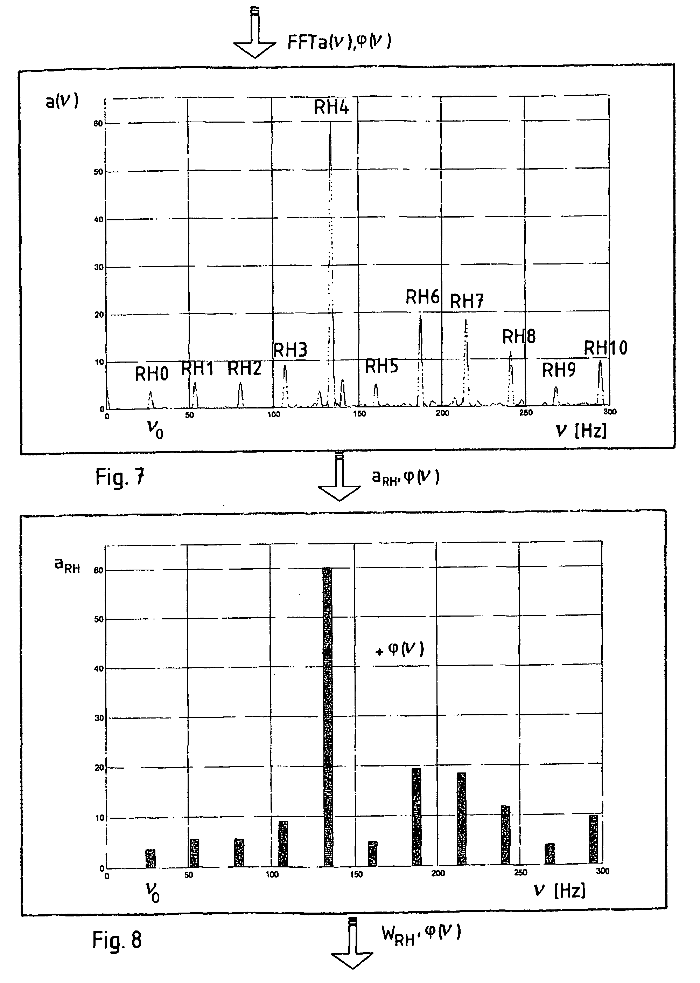

Gemäß Fig. 7 in dem dargestellten Beschleunigungsspektrum a(v) alle Frequenzanteile, die keinen Radunrundheitsharmonischen RH0-RH10 entsprechen, Null gesetzt werden, sodass ein vereinfachtes Beschleunigungsspektrum (Fig. 8) resultiert, in welchem nur die Radunrundheitsharmonischen vertreten sind.

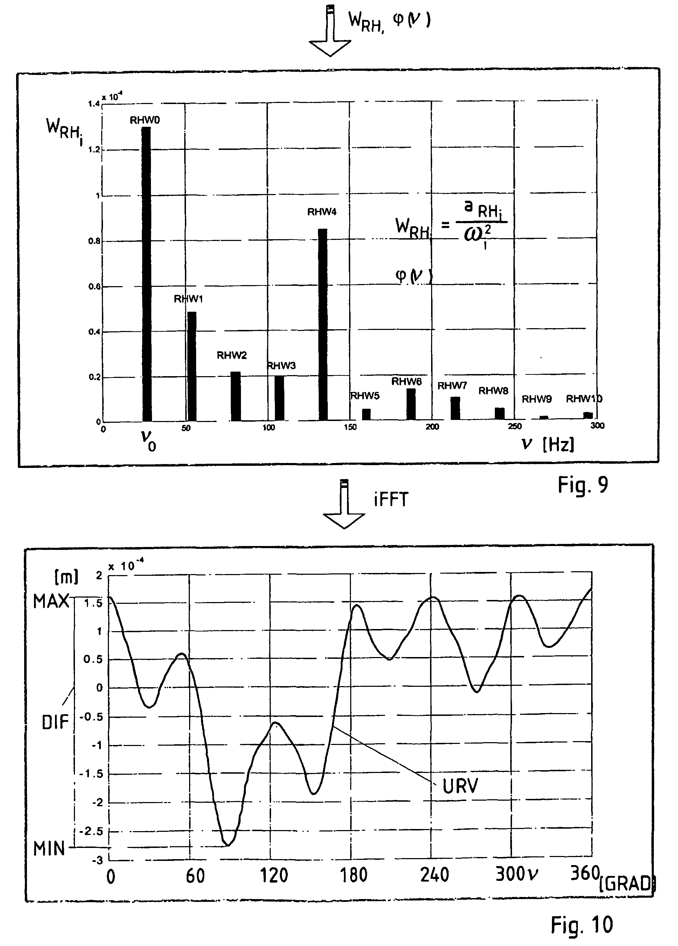

Aus vom Oberbau unabhängigen Anteilen der Beschleunigungsamplituden a_{RH}, a_{RHi} ergeben sich durch Division durch das Quadrat der jeweiligen Kreisdrehfrequenz ωᵢ die räumlichen Amplituden w_{RHi} der Radunrundheitsharmonischen überwachter Laufflächen (Fig. 9).

Aus den resultierenden räumlichen Radunrundheitsharmonischen RHW0-RHW10 mit den räumlichen Amplituden w_{RH} und den jeweiligen Phasenwinkeln ϕ wird in weiterer Folge ein räumlicher Unrundheitsverlauf URV der Lauffläche des betrachteten Rades errechnet. Hierzu werden die räumlichen Radunrundheitsharmonischen RHW0-RHW10, d. h. die jeweiligen räumlichen Amplituden w_{RHi} und Phasenwinkel ϕ einer inversen Fouriertransformation iFFT unterworfen (Fig. 10). Der räumliche Unrundheitsverlauf URV der Lauffläche ergibt sich sodann unmittelbar aus der inversen Fouriertransformation iFFT der räumlichen Radunrundheitsharmonischen.

Durch mehrfaches Mitteln der räumlichen Unrundheitsverläufe URV über mehrere Zeitfenster ergibt sich eine zuverlässige Form der diagnostizierten Unrundheit. Der (absolute) Spitze zu Spitze Wert, d. h. die Differenz DIF zwischen dem Maximum MAX und dem Minimum MIN des Unrundheitsverlaufes URV stellt einen Kennwert KEN der Abweichung des Rades von einem kreisförmigen Querschnitt und somit ein Maß für den Zustand des betrachteten Rades dar.

Der Hauptvorteil der soeben beschriebenen Methode besteht darin, dass man anstelle statisch oder quasistatisch gemessener Unrundheitsverläufe URV das tatsächlich wirksame Profil der Lauffläche eines Rades ermitteln kann, das heißt, dass eine direkte Abbildung des wirksamen Laufflächenumfanges erfolgen kann. Da die Messung und Kennwertermittlung während des Fahrens erfolgt, wird einerseits die Erfassung und qualitative und quantitative Beurteilung plötzlich auftretender Laufflächenschäden ermöglicht, andererseits kann die Kennwertermittlung als Analyseinstrument zur Bestimmung des dynamischen Verhaltens vorgegebener statisch bestimmter Unrundheiten dienen.

Das oben beschriebene Verfahren kann selbstverständlich unter Verwendung bekannter, entsprechend programmierter Mikroprozessoren online durchgeführt werden. Dem Fachmann sind darüber hinaus zahlreiche Programme bzw. Programmiersprachen bekannt, die sich zur Realisierung des erfindungsgemäßen Verfahrens eignen, beispielsweise Mathematica, Matlab etc.

## Patentansprüche

1. Verfahren zur Schadenserkennung an in Achslagerungen (AXL) gelagerten Rädern (RAD) eines Schienenfahrzeuges, wobei im Bereich zumindest einer Achslagerung (AXL) zumindest ein Beschleunigungssignal (SI1, SI2, SI3, SI4) erzeugt wird, aus welchem Radunrundheitsharmonische (RH0, RH1, RH2, RH3, RH4, RH5, RH6, RH7, RH8, RH9, RH10) ermittelt werden, wobei aus einer vorgebbaren Anzahl von Radunrundheitsharmonischen (RH0, RH1, RH2, RH3, RH4, RH5, RH6, RH7, RH8, RH9, RH10) zumindest ein Kennwert (KEN), der ein Maß für den Zustand des betrachteten Rades darstellt, gebildet wird, **dadurch gekennzeichnet, dass** zur Berechnung des Kennwertes (KEN) Amplituden (a_{RHi}) einer vorgebbaren Anzahl von Radunrundheitsharmonischen (RH0- RH10) durch das Quadrat einer jeweils der betreffenden Radunrundheitsharmonischen (RH0-RH10) zugehörigen Kreisfrequenz (ωᵢ) dividiert und die daraus resultierenden, räumlichen Radunrundheitsharmonischen (RHW0-RHW10) hierauf unter Berücksichtigung ihrer Phasenlage (ϕ) einer inversen Fouriertransformation (iFFT) unterworfen werden.

2. Verfahren nach Anspruch 1, **dadurch gekennzeichnet, dass** zur Berechnung des Kennwertes (KEN) Signalwerte des zumindest einen Beschleunigungssignals (SI1, SI2, SI3, SI4), die innerhalb eines vorgebbaren Zeitfensters liegen, einer Fouriertransformation oder einer anderen unitären Transformation unterworfen werden, die den Zeitbereich eines Signals auf den Frequenzbereich abbildet.

3. Verfahren nach Anspruch 2, **dadurch gekennzeichnet, dass** aus jeder Transformierten der Signalwerte des Beschleunigungssignals (SI1, SI2, SI3, SI4) die Radunrundheitsharmonischen (RH0, RH1, RH2, RH3, RH4, RH5, RH6, RH7, RH8, RH9, RH10) zur Bildung des zumindest einen Kennwertes (KEN) ermittelt werden.

4. Verfahren nach einem der Ansprüche 1 bis 3, **dadurch gekennzeichnet, dass** zur Ermittlung der Radunrundheitsharmonischen (RH0, RH1, RH2, RH3, RH4, RH5, RH6, RH7, RH8, RH9, RH10) die Drehfrequenz (vo) einer Radachse zumindest eines betrachteten Rades ermittelt wird.

5. Verfahren nach einem der Ansprüche 1 bis 4, **dadurch gekennzeichnet, dass** der zumindest eine Kennwert (KEN) in einer Kennwertdatenbank (KDA) abgelegt wird.

6. Vorrichtung zur Schadenserkennung an in Achslagern (AXL) gelagerten Rädern eines Schienenfahrzeuges, wobei im Bereich zumindest einer Achslagerung (AXL) zumindest ein Beschleunigungssensor (BSE) vorgesehen ist, der mit einer Auswerteeinheit (ASW) in Verbindung steht, die dazu eingerichtet ist, zumindest ein Beschleunigungssignal (SI1, SI2, SI3, SI4) von dem Beschleunigungssensor zu empfangen, und daraus Radunrundheitsharmonische (RH1-RH10) zu ermitteln, wobei die Auswerteeinheit weiters dazu eingerichtet ist, aus einer vorgebbaren Anzahl von Radunrundheitsharmonischen (RH1-RH10) zumindest einen Kennwert (KEN) zu bilden, der ein Maß für den Zustand des betrachteten Rades darstellt, **dadurch gekennzeichnet, dass** die Auswerteeinheit (ASW) zur Bildung des Kennwertes dazu eingerichtet ist, Amplituden (a_{RHi}) einer vorgebbaren Anzahl von Radunrundheitsharmonischen (RH0- RH10) durch das Quadrat einer jeweils der betreffenden Radunrundheitsharmonischen (RH0-RH10) zugehörigen Kreisfrequenz (ωᵢ) zu dividieren und die daraus resultierenden, räumlichen Radunrundheitsharmonischen (RHW0-RHW10) hierauf unter Berücksichtigung ihrer Phasenlage (ϕ) einer inversen Fouriertransformation (iFFT) zu unterwerfen.

7. Vorrichtung nach Anspruch 6, **dadurch gekennzeichnet, dass** die Auswerteeinheit (ASW) dazu eingerichtet ist, Signalwerte des zumindest einen Beschleunigungssignals (SI1, SI2, SI3, SI4) die innerhalb eines vorgebbaren Zeitfensters liegen, einer Fouriertransformation oder einer anderen unitären Transformation, die den Zeitbereich eines Signals auf den Frequenzbereich abbildet, zu unterwerfen.

8. Vorrichtung nach Anspruch 7, **dadurch gekennzeichnet, dass** die Auswerteeinheit (ASW) dazu eingerichtet ist, aus jeder Transformierten der Signalwerte des Beschleunigungssignals (SI1, SI2, SI3, SI4) die Radunrundheitsharmonischen (RH0, RH1, RH2, RH3, RH4, RH5, RH6, RH7, RH8, RH9, RH10) zu ermitteln.

9. Vorrichtung nach einem der Ansprüche 6 bis 8, **dadurch gekennzeichnet, dass** zur Ermittlung der Radunrundheitsharmonischen (RH0-RH10) die Drehfrequenz (ν₀) einer Radachse zumindest eines betrachteten Rades ermittelt wird.

10. Vorrichtung nach einem der Ansprüche 6 bis 9, **dadurch gekennzeichnet, dass** eine Kennwertdatenbank (KDA) zur Speicherung des Kennwertes (KEN) vorgesehen ist.

## Claims

1. A method of detecting defects in wheels (RAD) of a rail vehicle that are borne on axle bearings (AXL), in which there is produced in the region of at least one axle bearing (AXL), at least one acceleration signal (SI1, SI2, SI3, SI4), from which wheel non-circularity harmonics (RH0, RH1, RH2, RH3, RH4, RH5, RH6, RH7, RH8, RH9, RH10) are obtained and from a predefined number of said wheel non-circularity harmonics (RH0, RH1, RH2, RH3, RH4, RH5, RH6, RH7, RH8, RH9, RH10) at least one characteristic value (KEN) is generated which provides a measure of the state of the wheel under consideration, **characterized in that,** for computation of the characteristic value (KEN), the amplitudes (a_{RHi}) of a predefined number of wheel non-circularity harmonics (RH0 -RH10) are divided by the square of the angular frequency (ωᵢ) pertaining to the relevant wheel non-circularity harmonics (RH0 - RH10) and the resultant spatial wheel non-circularity harmonics (RHW0 - RHW10) are then subjected to an inverse Fourier transform (iFFT) while taking into account the phase position (ϕ) thereof.

2. A method as defined in claim 1, **characterized in that**, for computation of the characteristic value (KEN), signal magnitudes of the at least one acceleration signal (SI1, SI2, SI3, SI4 lying within a predefined time window are subjected to a Fourier transform or some other unitary transformation which produces a time domain image of a signal on the frequency domain.

3. A method as defined in claim 2, **characterized in that** each transformation of the signal magnitudes of the acceleration signal (SI1, SI2, SI3, SI4) is implemented to obtain the wheel non-circularity harmonics (RH0, RH1, RH2, RH3, RH4, RH5, RH6, RH7, RH8, RH9, RH10) for generating the at least one characteristic value (KEN).

4. A method as defined in any one of claims 1 to 3, **characterized in that** for the purpose of determining said wheel non-circularity harmonics (RH0, RH1, RH2, RH3, RH4, RH5, RH6, RH7, RH8, RH9, RH10), the rotational frequency (ν₀) of a wheel axle of at least one wheel under consideration is determined.

5. A method as defined in any one of claims 1 to 4, **characterized in that** the at least one characteristic value (KEN) is stored in a characteristic data bank (KDA).

6. A device for the detection of defects in wheels (RAD) of a rail vehicle that are borne on axle bearings (AXL), in which there is provided in the region of at least one axle bearing (AXL) at least one acceleration sensor (BSE) which is connected to an evaluating unit (ASW) which is adapted to receive at least one acceleration signal (SI1, SI2, SI3, SI4) from said acceleration sensor and to obtain wheel non-circularity harmonics (RH1 - RH10) therefrom, said evaluating unit being further adapted to generate, from a predefined number of said wheel non-circularity harmonics (RH1 - RH10), at least one characteristic value (KEN) which provides a measure of the state of the wheel under consideration, **characterized in that** said evaluating unit (ASW) for forming said characteristic value is adapted to divide the amplitude values (a_{RHi}) of a predefined number of wheel non-circularity harmonics (RH0 - RH10) by the square of the angular frequency (ωᵢ) associated with the respective wheel non-circularity harmonics (RH0 - RH10) and to subject the resultant spatial wheel non-circularity harmonics (RHW0 - RHW10) to an inverse Fourier transform (iFFT) making allowance for the phase position (ϕ) thereof.

7. A device as defined in claim 6, **characterized in that** the evaluating unit (ASW) is adapted to subject signal magnitudes of the at least one acceleration signal (SI1, SI2, SI3, SI4) lying within a predefined time window to a Fourier transform or some other unitary transformation that produces a time domain image of a signal on the frequency domain.

8. A device as defined in claim 7, **characterized in that** the evaluating unit (ASW) is adapted to ascertain the wheel non-circularity harmonics (RH0, RH1, RH2, RH3, RH4, RH5, RH6, RH7, RH8, RH9, RH10) from each transformation of the signal magnitudes of the acceleration signal (SI1, SI2, SI3, SI4).

9. A device as defined in any one of claims 6 to 8, **characterized in that,** for the purpose of determining the wheel non-circularity harmonics (RH0 - RH10), the rotational frequency (ν₀) of a wheel axle of at least one wheel under consideration is determined.

10. A device as defined in any one of claims 6 to 9, **characterized in that** a characteristic data bank (KDA) is provided for the storage of said characteristic value (KEN).

## Revendications

1. Procédé pour identifier des endommagements sur des roues (RAD), montées dans des boîtes d'essieu (AXL), d'un véhicule sur rails, selon lequel dans la zone d'au moins une boite d'essieu (AXL) au moins un signal d'accélération (SI1,SI2,SI3,SI4) est produit, signal à partir duquel on détermine des harmoniques de faux-rond de roue (RH0,RH1,RH2,RH3,RH4,RH5,RH6,RH7,RH8,RH9,RH10), selon lequel à partir d'un nombre pouvant être prédéterminé d'harmoniques de faux-rond de roues (RH0,RH1,RH2,RH3,RH4, RH5,RH6,RH7,RH8,RH9,RH10) on forme au moins une valeur caractéristique (KEN), qui représente une mesure de l'état de la roue considérée, **caractérisé en ce que** pour le calcul de la valeur caractéristique (KEN), on divise des amplitudes (a_{RHi}) d'un nombre pouvant être prédéterminé d'harmoniques de faux-rond de roue (RH0-RH10) au moyen du carré d'une fréquence angulaire (ωᵢ) qui est associée respectivement aux harmoniques considérés de faux-rond de roue (RH0-RH10) et on soumet alors à une transformation de Fourier inverse (iFFT) les harmoniques spatiaux de faux-rond de roue (RHW0-RHW10), qui en résultent, en tenant compteur de leur position de phase (ϕ).

2. Procédé selon la revendication 1, **caractérisé en ce que** pour le calcul de la valeur caractéristique (KEN), on soumet les valeur du au moins un signal d'accélération (SI1,SI2,SI3,SI4), qui sont situées à l'intérieur d'une fenêtre pouvant être prédéterminée, à une transformation de Fourier ou à une autre transformation unitaire, qui forme l'image de la gamme temporelle d'un signal dans la gamme des fréquences.

3. Procédé selon la revendication 2, **caractérisé en ce qu'**on détermine, à partir de chaque valeur transformée faisant partie des valeurs du signal d'accélération (SI1,SI2,SI3, SI4), les harmoniques de faux-rond de roue (RH0,RH1, RH2, RH3, RH4, RH5, RH6, RH7, RH8, RH9, RH10) pour former au moins une valeur caractéristique (KEN).

4. Procédé selon l'une des revendications 1 à 3, **caractérisé en ce que** pour la détermination des harmoniques de faux-rond de roue (RH0,RH1,RH2,RH3,RH4,RH5,RH6,RH7, RH8,RH9,RH10), on détermine la fréquence angulaire (v₀) d'un essieu d'au moins une roue considérée.

5. Procédé selon l'une des revendications 1 à 4, **caractérisé en ce que** la au moins une valeur caractéristique (KEN) est mémorisée dans une banque (KDA) de données de valeurs caractéristiques.

6. Dispositif pour identifier dans des roues, tourillonnées dans des boîtes d'essieu (AXL) d'un véhicule sur rails, dans lequel dans la zone d'au moins une boîte d'essieu (AXL) il est prévu au moins un capteur d'accélération (BSE), qui est relié à une unité d'évaluation (ASW) qui est agencée de manière à recevoir au moins un signal d'accélération (SI1,SI2,SI3,SI4) de la part du capteur d'accélération et pour déterminer à partir de là des harmoniques de faux-rond de roue (RH1-RH6), selon lequel l'unité d'évaluation est conçue en outre pour former, à partir d'un nombre pouvant être prédéterminé d'harmoniques de faux-rond de roue (RH1-RH10), au moins une valeur caractéristique (KEN), qui représente une mesure de l'état de la roue considérée, **caractérisé en ce que** l'unité d'évaluation (ASW) est conçue pour la formation de la valeur caractéristique de manière à diviser des amplitudes (a_{RHi}) d'un nombre pouvant être prédéterminé d'harmoniques de faux-rond de roue (RH1-RH10) par le carré d'une fréquence angulaire (ωᵢ) associée à l'un respectif des harmoniques considérés de faux-rond de roue (RH1-RH10) et soumettre ensuite les harmoniques spatiaux de faux-rond de roue (RSW0-RSW10), qui en résultent, en tenant compte de leur position de phase (ϕ), à une transformation de Fourier inverse (iFFT).

7. Dispositif selon la revendication 6, **caracté** **risé en ce que** l'unité d'évaluation (ASW) est agencée de manière à soumettre des valeurs du au moins un signal d'accélération (SI1,SI2,SI3,SI4), qui sont situées dans une fenêtre temporelle pouvant être prédéterminée, à une transformation de Fourier ou à une autre transformation unitaire, qui forme l'image du domaine temporel d'un signal dans le domaine des fréquences.

8. Dispositif selon la revendication 7, **caractérisé en ce que** l'unité d'évaluation (ASW) est agencée de manière à déterminer, à partir de chaque transformée des valeurs du signal d'accélération (SI1,SI2,SI3,SI4), les harmoniques de faux-rond de roue (RH0,RH1,RH2,RH3,RH4,RH5, RH6,RH7,RH8,RH9,RH10).

9. Dispositif selon l'une des revendications 6 à 8, **caractérisé en ce que** pour la détermination des harmoniques de faux-rond de roue (RH0-RH10), on détermine la fréquence angulaire (v₀) d'un essieu d'au moins une roue considérée.

10. Dispositif selon l'une des revendications 6 à 9, **caractérisé en ce qu'**une banque (KDA) de données de valeurs caractéristiques est prévue pour la mémorisation de la valeur caractéristique (KEN).
